# EUROPEAN PATENT SPECIFICATION

(11) **EP 3 702 199 B1**
(45) Date of publication and mention of the grant of the patent: **11.08.2021**
(21) Application number: 20156679.1
(22) Date of filing: 11.02.2020
(51) Int. Cl.: B60L 53/12, B60L 53/16, B60L 53/18, B65H 75/42, H02G 11/02

(54) **ELECTRIC VEHICLE PROVIDED WITH A REMOVABLE TERMINAL CONNECTOR, WITH A RETRACTABLE CABLE, FOR RECHARGING THE BATTERY OF THE VEHICLE**
ELEKTROFAHRZEUG MIT EINEM ABNEHMBAREN ANSCHLUSSSTECKER MIT EINEM EINZIEHBAREN KABEL ZUM AUFLADEN DER FAHRZEUGBATTERIE
VÉHICULE ÉLECTRIQUE DOTÉ D'UN CONNECTEUR DE TERMINAL AMOVIBLE ET D'UN CÂBLE RÉTRACTABLE POUR RECHARGER LA BATTERIE DU VÉHICULE

(30) Priority: 01.03.2019 IT 201900002979
(43) Date of publication of application: 02.09.2020
(73) Proprietor: FCA Italy S.p.A., 10135 Torino (IT)
(72) Inventor: CALONACI, Daniele, I-10135 Torino (IT); DILILLO, Alberto, I-10135 Torino (IT)
(74) Representative: Notaro, Giancarlo

(56) References cited:
- EP-A1- 0 536 056
- EP-A1- 0 552 737
- EP-A1- 2 505 417
- EP-A1- 2 506 378
- EP-A1- 2 571 135
- DE-A1-102009 016 895
- DE-A1-102013 219 435
- FR-A1- 2 964 805
- US-A1- 2017 012 459

## Description

The present invention relates to electric vehicles, in particular of the "city car" category, of the known type comprising an electric connection device, for recharging one or more batteries of the vehicle, which includes a connector member provided on the vehicle, outside of the vehicle, for the electric connection to an electric supply column. The invention is applicable both to vehicles with electric traction only and to hybrid vehicles of the plug-in type.

A vehicle of the type indicated in the preamble of claim 1 is known from document DE 10 2009 016895 A1 and document EP 2 505 417 A1.

The object of the present invention is that of providing an electric vehicle of the above indicated known type in which the operation for recharging the battery is particularly simple and easy.

A further object of the present invention is that of providing a vehicle of the above indicated type in which the connector member dedicated to the electric connection to the supply column is configured so as to be adapted to fulfill a number of additional functions.

A further object of the invention is that of achieving the above indicated goals with a solution which is of simple and inexpensive construction.

In view of achieving these and further objects, the invention provides an electric vehicle having the features of claim 1.

The above mentioned removable terminal connector can be configured with contacts adapted to mate with corresponding contacts of the supply column.

A mechanism may be provided for quick coupling of the terminal member, for example in the form of a jack-connector, able to be mated with the seat in the supply column, or also able to be mated with connectors of other cars during the recharging stage at a column or for sharing electric energy among more cars. If one car has its batteries almost exhausted, there is thus the possibility that another car can pass thereto the electric energy which is necessary for at least reaching a recharging column.

A terminal might be also configured for a contactless coupling with the electric supply column.

In one example, the body of the terminal connector has an annular shape, with a central opening, so that, in the rest condition in which the terminal connector is received within its seat, the body of said terminal connector is centered around a support projecting inside said seat.

Also in the case of this example, the above mentioned light source extends according to a ring-like configuration around the central opening of the annular body.

Also according to a preferred additional feature, the seat which receives the terminal member in its inoperative condition is provided on the body of the vehicle, adjacent to the windshield. In this case, the body of the terminal member may be provided with a lateral wall having at least one edge which can be used as a scraper tool, for example for removing an ice layer from the vehicle windshield. For a better result, it may be provided that the portion acting as a scraper can be electrically heated.

Further features and advantages of the invention will become from the description which follows with reference to the annexed drawings, given purely by way of non limiting example, in which:
- figure 1 is a top view which partially shows a vehicle according to the invention during a battery recharging operation,
- figure 2 is a front view of a preferred embodiment of the removable terminal member forming part of the vehicle according to the invention,
- figure 3 is a side view which shows the terminal member of figure 2 both in a position close to the supply column, for coupling therewith, and in a position spaced apart from the supply column, for a contactless coupling,
- figure 4 is a view in a cross section and at an enlarged scale which shows the detail of the seat provided on the vehicle for the recharging terminal connector, with the terminal connector being received therein, and
- figure 5 shows the terminal member in the coupling condition on the column, with the use of any type of connector, for example a jack-type connector.

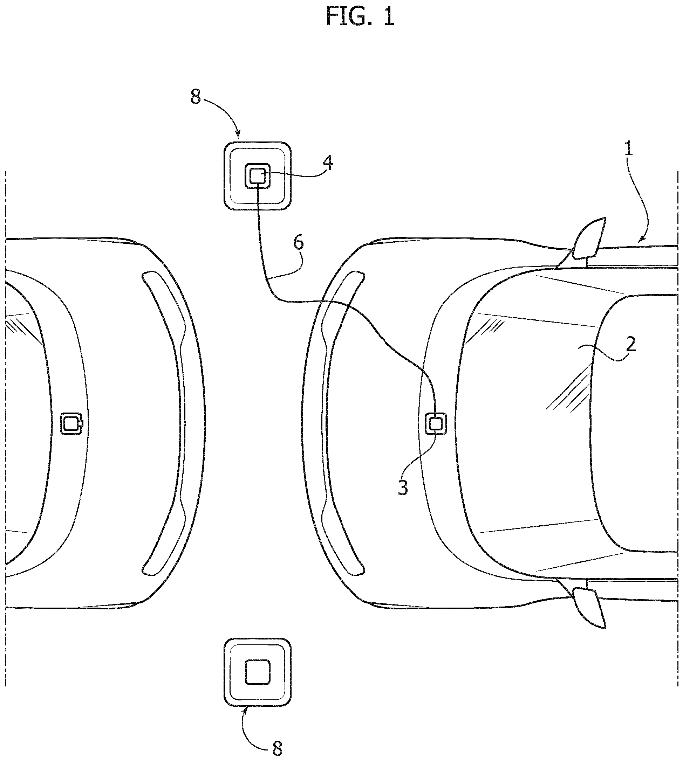

With reference to figure 1, numeral 1 designates an electric vehicle according to the present invention. The example shown herein relates to a vehicle of the "city car" category. However, it is well understood that the invention can be applied to any type of electric vehicle and in particular both to vehicles which only have an electric propulsion, and hybrid electric vehicles.

Outside the vehicle, in a central portion of the car body adjacent to the base of the windshield 2, there is provided a seat 3 for an electric connector member 4, serving as a recharging terminal connector.

Naturally, this arrangement is shown herein purely by way of example.

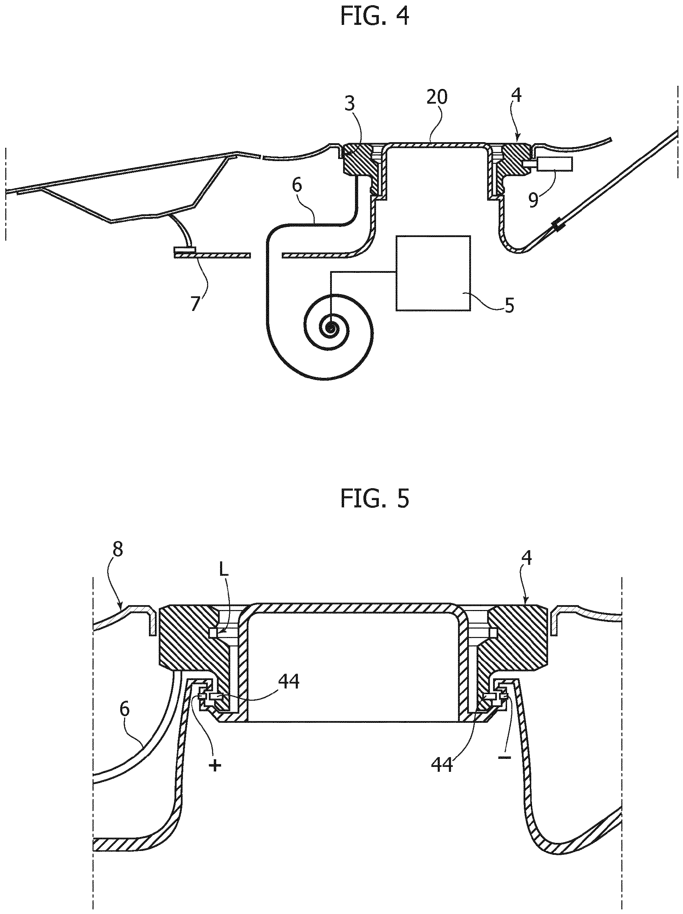

As diagrammatically shown in figure 4, the electric circuit 5 of the vehicle is connected to one end of a supply electric cable 6 which constitutes a sort of umbilical cord for the removable terminal connector 4.

The electric cable 6 is in a rolled up condition (shown in figure 4) within one cavity 7 adjacent to the seat 3 when the terminal connector 4 is positioned within its seat 3.

When one must proceed to a recharging operation of the battery of the vehicle 1, the terminal connector 4 is grasped and removed from its seat 3, to be brought in proximity of an electric supply column 8. In this condition, the cable 6 is extended outside of the seat 3 (see figure 1).

The details of construction relating to the rolling device for rolling the cable 6 are not described nor shown herein, since they can be made in any known way. For example, a biasing spring may be provided for biasing the cable towards its rolled up condition. Also a latch device may be provided, which can be deactivated through a push-button, for enabling to hold the cable 6 in any unrolled condition, against the action of the spring.

Also according to a preferred embodiment, to the seat 3 there may be associated an actuator device 9 of any known type adapted to automatically lock the terminal member 4 in its rest position inside the seat 3, which actuator device can be deactivated by means of a remote control device, which for example is associated to the key for opening the vehicle doors and for activating the vehicle motor. Also the details of construction relating to this device are not shown, since they can be made in any known way, for example similarly to the solutions adopted for locking the lid which covers the fuel tank refill tube which is used in conventional vehicles with internal combustion engine.

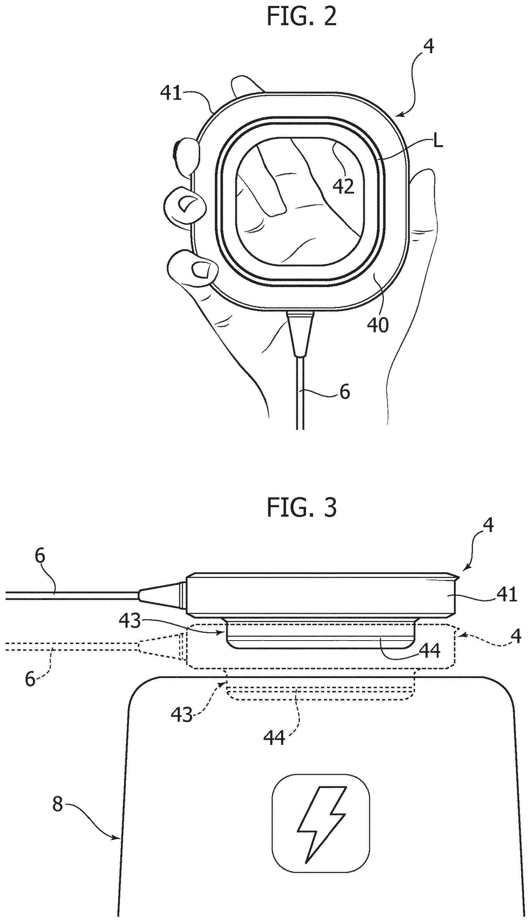

In the example shown in figure 2, the terminal connector 4 has a body shaped as an annular plate or disc (in the specific example with a quadrangular configuration) having a front wall 40 and a peripheral lateral wall 41, which makes grasping of the terminal connector 4 easier (as shown by way of example in figure 2).

The front wall 40 of the terminal member 4 carries a light source (a LED source in the example) which can be used as a service light, for example to lighting the area of connection to the electric supply column 8. In the illustrated example, the light source is in the form of a continuous ring which extends around the central opening 42 of the annular body of member 4.

Naturally, the configuration which is described and shown herein for the terminal member 4 is given purely by way of example.

With reference to figure 3, the terminal connector 4 is provided, in the case of the specific example illustrated herein, with an annular central portion 43 projecting axially from the front wall 40, for coupling with the supply column 8. This portion 43 carries contacts 44 adapted to cooperate with corresponding contacts provided on the column 8. However, the case is not excluded in which the terminal member 4 is configured for being connected to the column 8 through a contactless connection.

As shown in figure 4, in rest condition received within the seat 3, the annular body of the terminal connector is centered with its opening 42 around a support 20 projecting within the seat 3.

In the case of the preferred embodiment which is shown in the drawings, the terminal connector 4 is adapted to fulfill also an additional function as a tool for removing ice formations from the vehicle windshield, due to its arrangement adjacent to the windshield 2. To this end, the free edge of the lateral wall 41 of the member 4 is configured so that it can be used also as a scraper. For a better result, it may be provided that the portion which can be used as a scraper can be electrically heated.

Naturally, while the principle of the invention remains the same, the details of construction and the embodiments may widely vary with respect to what has been described and shown purely by way of example, without departing from the scope of the present invention, as defined in the appended claims.

## Claims

1. Electric vehicle, in particular vehicle of the "city car" type, with an electric connection device for recharging one or more batteries of the vehicle, which device comprises an electric connector member (4) provided on the vehicle, outside the vehicle, for the electric connection to an electric supply column (8),
wherein said connector member (4) is provided within a seat (3) outside the vehicle and is in the form of a terminal connector (4) which is adapted to be grasped and removed from said seat (3) of the vehicle, to be brought in proximity of the electric supply column (8), and wherein said removable terminal connector (4) is connected to the electric circuit of the vehicle (5) by means of a supply cable (6) which is normally in a rolled up condition within one cavity (7) adjacent to said seat (3) and which is able to be unrolled when the terminal connector (4) is removed and brought in proximity of the electric supply column (8),
said vehicle being **characterized in that** said terminal connector (4) has a body with a plate-like or disc-like shape having a front wall (40) from which an electric coupling portion (43) projects, for coupling, with contact or without contact, with the supply column (8), and a peripheral lateral wall (41), for grasping of the terminal member (4), and
**in that** said main wall (40) carries a light source (L), for example a LED source, which is configured to be used as a service light, for example for illuminating the area of connection to the supply column (8).

2. Electric vehicle according to claim 1, **characterized in that** said terminal connector (4) is configured with contacts (44) adapted to be mated with corresponding contacts of the supply column (8).

3. Electric vehicle according to claim 1, **characterized in that** said terminal connector (4) is configured for a contactless coupling with the electric supply column (8).

4. Electric vehicle according to claim 1, **characterized in that** said terminal connector (4) has an annular body, with a central opening (42), so that, in the rest condition in which the terminal connector is received within said seat (3), the body of said terminal connector (4) is centered around a support (20) projecting within said seat (3).

5. Electric vehicle according to claim 1, **characterized in that** said light source (L) extends according to a ring-like configuration around a central opening (42) of the annular body.

6. Electric vehicle according to claim 1, **characterized in that** the seat (3) for the terminal member (4) is provided on the vehicle body adjacent to the windshield (2) and **in that** the body of the terminal connector (4) has at least one edge configured to act as a scraper tool, which is adapted to be used for example for removing a layer of ice from the windshield (2) of the vehicle, said scraper edge being preferably adapted to be electrically heated.

7. Electric vehicle according to claim 1, **characterized in that** to the cable (6) there is associated a rolling device, for example a rolling spring device, provided with a latch mechanism for holding the cable in any extended unrolled condition.

8. Electric vehicle according to claim 1, **characterized in that** adjacent to said seat (3), the vehicle is provided with a locking device (9) for locking the terminal connector (4) within its seat (3), said locking device being adapted to be deactivated by means of a remote control device, which is configured to be associated for example to the vehicle key.

## Patentansprüche

1. Elektrofahrzeug, insbesondere Fahrzeug vom Typ "Stadtauto", mit einer elektrischen Anschlussvorrichtung zum Wiederaufladen von einer oder mehreren Batterien des Fahrzeugs, wobei die Vorrichtung ein am Fahrzeug, außerhalb des Fahrzeugs, vorgesehenes elektrisches Steckverbinderelement (4) für den elektrischen Anschluss an eine elektrische Versorgungssäule (8) umfasst,
wobei das Steckverbinderelement (4) innerhalb eines Sitzes (3) außerhalb des Fahrzeugs vorgesehen ist und die Form eines Anschlusssteckverbinders (4) hat, der dazu geeignet ist, ergriffen und von dem Sitz (3) des Fahrzeugs entfernt zu werden, um in die Nähe der elektrischen Versorgungssäule (8) gebracht zu werden, und wobei der abnehmbare Anschlusssteckverbinder (4) mit dem Stromkreis des Fahrzeugs (5) mittels eines Versorgungskabels (6) verbunden wird, das sich normalerweise in einem aufgerollten Zustand innerhalb eines Hohlraums (7) neben dem Sitz (3) befindet und das abgerollt werden kann, wenn der Anschlusssteckverbinder (4) entfernt und in die Nähe der elektrischen Versorgungssäule (8) gebracht wird,
wobei das Fahrzeug **dadurch gekennzeichnet ist, dass** der Anschlusssteckverbinder (4) einen Körper mit einer platten- oder scheibenartigen Form aufweist, der eine Vorderwand (40), von der ein elektrischer Kopplungsabschnitt (43) zum Koppeln, mit Kontakt oder ohne Kontakt, mit der Versorgungssäule (8) vorsteht, und eine seitliche Umfangswand (41) zum Ergreifen des Anschlusselements (4) aufweist, und
**dadurch,** dass die Hauptwand (40) eine Lichtquelle (L) trägt, wie beispielsweise eine LED-Quelle, die dazu konfiguriert ist, als Betriebsleuchte verwendet zu werden, wie zum Beispiel zum Beleuchten des Verbindungsbereiches mit der Versorgungssäule (8).

2. Elektrofahrzeug nach Anspruch 1, **dadurch gekennzeichnet, dass** der Anschlusssteckverbinder (4) mit Kontakten (44) konfiguriert ist, die dazu ausgelegt sind, mit entsprechenden Kontakten der Versorgungssäule (8) zusammengesteckt zu werden.

3. Elektrofahrzeug nach Anspruch 1, **dadurch gekennzeichnet, dass** der Anschlusssteckverbinder (4) zur kontaktlosen Kopplung mit der Versorgungssäule (8) ausgelegt ist.

4. Elektrofahrzeug nach Anspruch 1, **dadurch gekennzeichnet, dass** der Anschlusssteckverbinder (4) einen ringförmigen Körper mit einer zentralen Öffnung (42) aufweist, so dass im Ruhezustand, in dem der Anschlusssteckverbinder in dem Sitz (3) aufgenommen ist, der Körper des Anschlusssteckverbinders (4) um eine in den Sitz (3) ragende Stütze (20) zentriert ist.

5. Elektrofahrzeug nach Anspruch 1, **dadurch gekennzeichnet, dass** sich die Lichtquelle (L) entsprechend einer ringförmigen Konfiguration um eine zentrale Öffnung (42) des ringförmigen Körpers herum erstreckt.

6. Elektrofahrzeug nach Anspruch 1, **dadurch gekennzeichnet, dass** der Sitz (3) für das Anschlusselement (4) an der Fahrzeugkarosserie angrenzend an die Windschutzscheibe (2) vorgesehen ist und **dadurch,** dass der Körper des Anschlusssteckverbinders (4) mindestens eine Kante aufweist, die dazu ausgelegt ist, als Kratzwerkzeug zu wirken, das beispielsweise zum Entfernen einer Eisschicht von der Windschutzscheibe (2) des Fahrzeugs verwendet werden kann, wobei die Kratzerkante vorzugsweise dazu eingerichtet ist, elektrisch beheizt zu werden.

7. Elektrofahrzeug nach Anspruch 1, **dadurch gekennzeichnet, dass** dem Kabel (6) eine Aufrollvorrichtung, z.B. eine Rollfedervorrichtung, zugehörig ist, die mit einem Rastenmechanismus zum Halten des Kabels in einem beliebig ausgezogenen abgerollten Zustand versehen ist.

8. Elektrofahrzeug nach Anspruch 1, **dadurch gekennzeichnet, dass** das Fahrzeug neben dem Sitz (3) eine Verriegelungseinrichtung (9) zum Verriegeln des Anschlusssteckverbinders (4) innerhalb seines Sitzes (3) aufweist, wobei die Verriegelungseinrichtung dazu eingerichtet ist, mittels einer Fernsteuerungsvorrichtung, die beispielsweise dem Fahrzeugschlüssel zugehörig ausgelegt werden kann, deaktiviert zu werden.

## Revendications

1. Véhicule électrique, en particulier véhicule de type "citadine", avec un dispositif de connexion électrique pour recharger une ou plusieurs batterie(s) du véhicule, lequel dispositif comprend un élément connecteur électrique (4) prévu sur le véhicule, à l'extérieur du véhicule, pour la connexion électrique à une colonne d'alimentation électrique (8),
dans lequel ledit élément connecteur (4) est prévu dans un siège (3) à l'extérieur du véhicule et se présente sous la forme d'un connecteur de borne (4) qui est adapté pour être saisi et retiré dudit siège (3) du véhicule, pour être amené à proximité de la colonne d'alimentation électrique (8), et dans lequel ledit connecteur de borne amovible (4) est relié au circuit électrique du véhicule (5) au moyen d'un câble d'alimentation (6) qui est normalement dans un état enroulé dans une cavité (7) adjacente audit siège (3) et qui peut être déroulé lorsque le connecteur de borne (4) est retiré et amené à proximité de la colonne d'alimentation électrique (8),
ledit véhicule étant **caractérisé en ce que** ledit connecteur de borne (4) a un corps ayant une forme de plaque ou une forme de disque ayant une paroi avant (40) à partir de laquelle une partie de couplage électrique (43) fait saillie, pour le couplage, avec ou sans contact, avec la colonne d'alimentation (8), et une paroi latérale périphérique (41), pour saisir l'élément de borne (4), et
**en ce que** ladite paroi principale (40) porte une source de lumière (L), par exemple une source LED, qui est configurée pour être utilisée comme feu de service, par exemple pour éclairer la zone de connexion à la colonne d'alimentation (8).

2. Véhicule électrique selon la revendication 1, **caractérisé en ce que** ledit connecteur de borne (4) est configuré avec des contacts (44) adaptés pour être accouplés avec des contacts correspondants de la colonne d'alimentation (8).

3. Véhicule électrique selon la revendication 1, **caractérisé en ce que** ledit connecteur de borne (4) est configuré pour un couplage sans contact avec la colonne d'alimentation électrique (8).

4. Véhicule électrique selon la revendication 1, **caractérisé en ce que** ledit connecteur de borne (4) a un corps annulaire, avec une ouverture centrale (42), de sorte que, dans l'état de repos dans lequel le connecteur de borne est reçu dans ledit siège (3), le corps dudit connecteur de borne (4) soit centré autour d'un support (20) faisant saillie dans ledit siège (3).

5. Véhicule électrique selon la revendication 1, **caractérisé en ce que** ladite source de lumière (L) s'étend selon une configuration en forme d'anneau autour d'une ouverture centrale (42) du corps annulaire.

6. Véhicule électrique selon la revendication 1, **caractérisé en ce que** le siège (3) pour l'élément de borne (4) est prévu sur la carrosserie de véhicule adjacente au pare-brise (2) et **en ce que** le corps du connecteur de borne (4) a au moins un bord configuré pour agir comme un outil de raclage, qui est adapté pour être utilisé, par exemple, pour retirer une couche de glace du pare-brise (2) du véhicule, ledit bord racleur étant de préférence adapté pour être chauffé électriquement.

7. Véhicule électrique selon la revendication 1, **caractérisé en ce qu'**au câble (6) est associé un dispositif d'enroulement, par exemple un dispositif à ressort d'enroulement, muni d'un mécanisme de verrouillage pour maintenir le câble dans un état déroulé étendu quelconque.

8. Véhicule électrique selon la revendication 1, **caractérisé en ce que**, de manière adjacente audit siège (3), le véhicule est muni d'un dispositif de blocage (9) pour bloquer le connecteur de borne (4) dans son siège (3), ledit dispositif de blocage étant adapté pour être désactivé au moyen d'un dispositif de commande à distance, qui est configuré pour être associé par exemple à la clé du véhicule.
